# EUROPEAN PATENT APPLICATION

(11) **EP 3 819 961 A1**
(43) Date of publication of application: **12.05.2021**
(21) Application number: 20152371.9
(22) Date of filing: 17.01.2020
(51) Int. Cl.: H01M 2/10

(54) **BATTERY CASE STRUCTURE**

(30) Priority: 07.11.2019 CN 201911084635
(71) Applicant: Delta Electronics, Inc., Taoyuan City 33370 (TW)
(72) Inventor: Wen, Ping-Hung, Taoyuan City 32063, Taiwan, R.O.C. (TW); Chen, Ying-Ping, Taoyuan City 32063, Taiwan, R.O.C. (TW)
(74) Representative: Uexküll & Stolberg

(57) **Abstract**

A battery case structure (1) is provided. The battery case structure (1) includes a housing (3), a shaft (4), a fixing part (5) and at least one lever part (6). While force from the accommodation space (34) toward the exterior of the housing (3) is applied on the main body (621) of the first arm (62) of the lever part (6), the main body (621) of the first arm (62) drives the second arm (63) to rotate around the shaft (4), so that the second arm (63) drives the battery (2) to be withdrawn from the housing (3) through the first opening (33). Comparing the conventional battery case structure with the battery case structure (1) of the present disclosure, the user can withdraw the battery (2) from the battery case structure (1) by applying force on the main body (621) of the first arm (62) of the lever part (6) merely. Consequently, the operation of withdrawing the battery (2) from the battery case structure (1) is labor-saving and convenient.

## Description

### FIELD OF THE INVENTION

The present disclosure relates to a battery case structure, and more particularly to a battery case structure capable of withdrawing a battery therefrom easily and conveniently.

### BACKGROUND OF THE INVENTION

Nowadays, battery has been widely employed in variety electronic devices. For accommodating the battery in the electronic device conveniently, the electronic device includes a battery case for accommodating the battery therein. The battery is maintained and replaced frequently. For allowing the battery to be withdrawn from the battery case, the conventional battery case includes two elongated openings located on the two opposite sides of the housing of the battery case, respectively. While the battery is withdrawn from the battery case, the user needs to touch the battery in the battery case through the two elongated openings and push the battery to move so as to withdraw the battery form the battery case through an opening on the top of the battery case. However, the user needs to apply force at least equal to the weight of the battery on the battery so as to withdraw the battery from the battery case. Consequently, the operation of withdrawing the battery from the battery case is laborious. Moreover, the user must touch the battery in the battery case through the elongated openings of the battery case so as to withdraw the battery from the battery case. Consequently, the position and the angle of the force applied on the battery are limited, and the battery is not easy to be withdrawn from the battery case.

Therefore, there is a need of providing a battery case structure so as to address the issues encountered by the prior arts.

### SUMMARY OF THE INVENTION

An object of the present disclosure provides a battery case structure having advantages of withdrawing a battery therefrom easily and conveniently.

In accordance with an aspect of the present disclosure, a battery case structure is provided. The battery case structure accommodates at least one battery therein. The battery case structure comprises a housing, a shaft, a fixing part and at least one lever part. The housing comprises a plurality of side walls and a bottom plate. The plurality of side walls are connected with each other and connected with the bottom plate respectively. The plurality of side walls and the bottom plate define an accommodation space disposed in the housing and comprising a first opening. The battery is disposed in the accommodation space through the first opening. One of the plurality of side walls comprises at least one second opening in fluid communication with the accommodation space. The fixing part is disposed in and connecting with the housing. The shaft is fixed to the housing through the fixing part. The at least one lever part comprises at least one first through hole, a first arm and a second arm. The first arm comprises a main body and at least one extension portion. The main body is connected with the second arm. The extension portion is connected with the main body and extended from the main body toward the accommodation space. The second arm is in contact with the battery while the battery is disposed in the accommodation space. The first through hole is disposed on the extension portion. The shaft is penetrated through the first through hole, so that the lever part is rotated around the shaft. In response to a force applied on the main body of the first arm. The main body of the first arm is rotated around the shaft along a direction from the second opening and away from the battery. The main body of the first arm drives the second arm to rotate around the shaft toward the first opening, so that the second arm drives the battery to be withdrawn from the housing through the first opening.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic perspective view illustrating a battery case structure according to a first embodiment of the present disclosure;
FIG. 2 is a schematic exploded view illustrating the battery case structure of FIG. 1;
FIG. 3 is a schematic exploded view illustrating a shaft, a fixing part and a lever part of the battery case structure of FIG. 1;
FIG. 4 is a schematic perspective view illustrating the lever part of the battery case structure of FIG. 1;
FIG. 5 is a schematic perspective view illustrating a battery case structure according to a second embodiment of the present disclosure;
FIG. 6 is a schematic exploded view illustrating the battery case structure of FIG. 5;
FIG. 7 is a schematic exploded view illustrating a shaft, a fixing part and a lever part of the battery case structure of FIG. 5;
FIG. 8 is a schematic perspective view illustrating a battery case structure according to a third embodiment of the present disclosure;
FIG. 9 is a schematic exploded view illustrating the battery case structure of FIG. 8; and
FIG. 10 is a schematic exploded view illustrating a shaft, a fixing part and a lever part of the battery case structure of FIG. 8.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

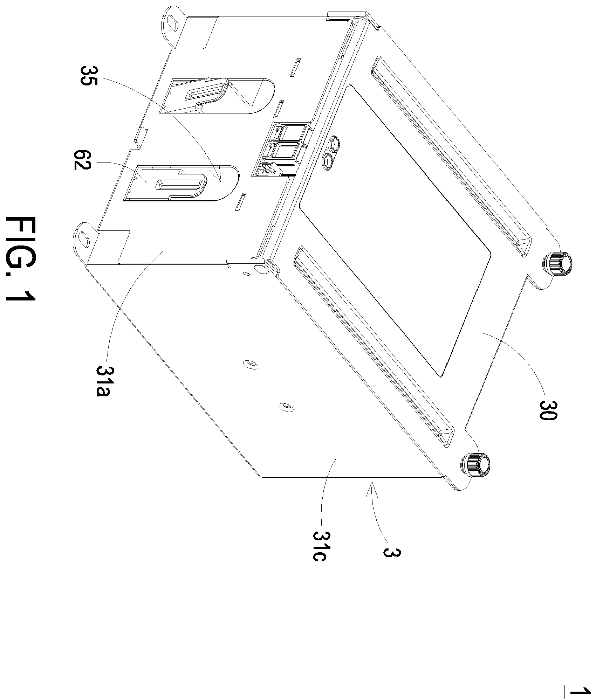

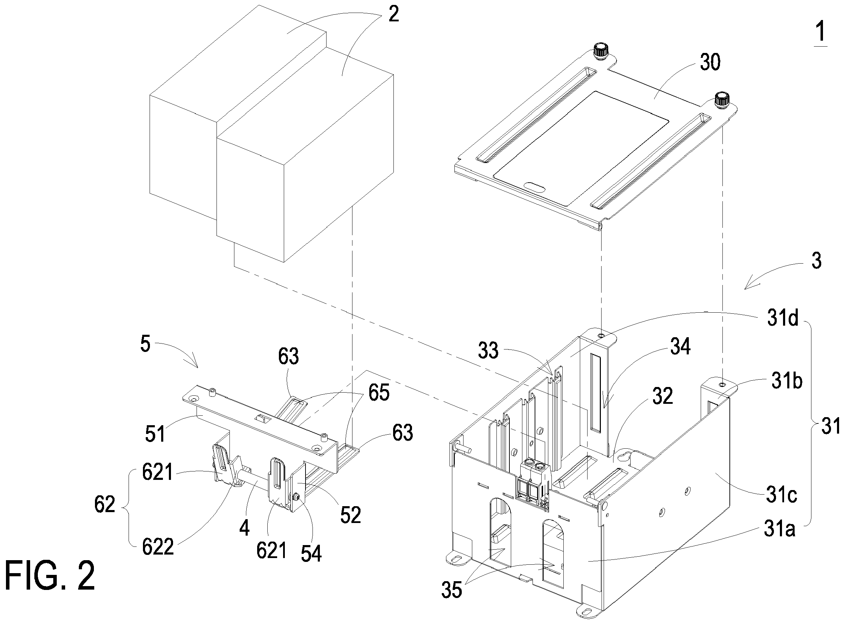

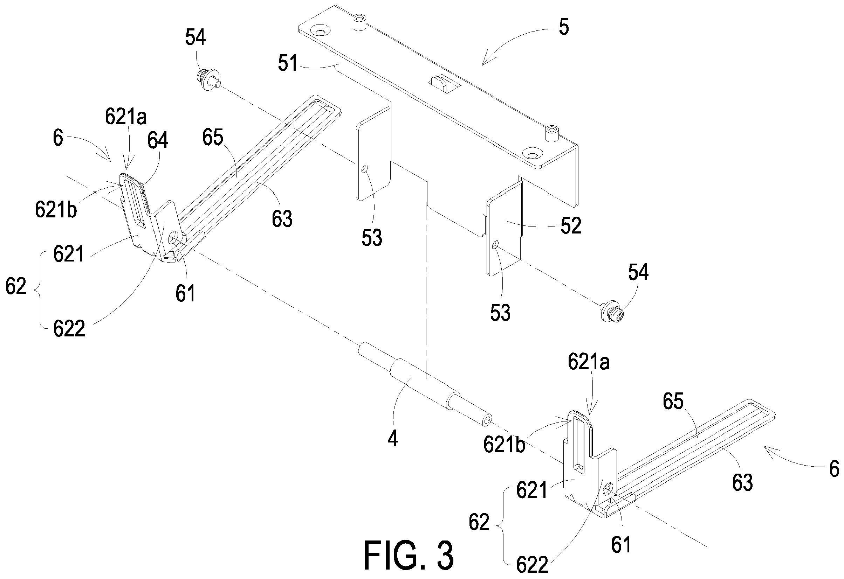

FIG. 1 is a schematic perspective view illustrating a battery case structure according to a first embodiment of the present disclosure. FIG. 2 is a schematic exploded view illustrating the battery case structure of FIG. 1. FIG. 3 is a schematic exploded view illustrating a shaft, a fixing part and a lever part of the battery case structure of FIG. 1. As shown in FIGS. 1 to 3, in this embodiment, at least one battery 2 is accommodated in the battery case structure 1. For example, the at least one battery 2 includes two batteries 2 (see FIG. 2). The battery case structure 1 includes a housing 3, a shaft 4, a fixing part 5 and at least one lever part 6.

The housing 3 includes a plurality of side walls 31 and a bottom plate 32. The plurality of side walls 31 are connected with each other and form a cuboid structure. The plurality of side walls 31 are connected with the bottom plate 32, respectively, and disposed around the edge of the bottom plate 32. The plurality of side walls 31 and the bottom plate 32 collaboratively define an accommodation space 34 disposed in the housing 3 and including a first opening 33. The battery 2 is disposed in the accommodation space 34 through the first opening 33. The first opening 33 is corresponding in position to the bottom plate 32, and the first opening 33 and the bottom plate 32 are located in two opposite sides of the housing 3. In this embodiment, the plurality of side walls 31 include a first side wall 31a, a second side wall 31b, a third side wall 31c and a fourth side wall 31d. The first side wall 31a and the second side wall 31b are located in two opposite sides of the housing 3. The third side wall 31c and the fourth side wall 31d are located in two opposite sides of the housing 3. The third side wall 31c and the fourth side wall 31d are located between the first side wall 31a and the second side wall 31b. Moreover, the first side wall 31a further includes at least one second opening 35 in fluid communication with the accommodation space 34. For example, the at least one second opening 35 includes two second openings 35, as shown in FIG. 1. In this embodiment, when the batteries 2 are disposed in the accommodation space 34, each battery 2 is corresponding in position to a corresponding second opening 35 of the two second openings 35.

The fixing part 5 is disposed in the housing 3, and two ends of the fixing part 5 are connected with the third side wall 31c and the fourth side wall 31d, respectively. The shaft 4 is disposed on the fixing part 5, and the shaft 4 is disposed in and fixed to the housing 3 through the fixing part 5.

In this embodiment, the at least one lever part 6 is disposed in the housing 3. Preferably but not exclusively, the battery case structure 1 includes two lever parts 6. Each lever part 6 includes at least one first through hole 61, a first arm 62 and a second arm 63. The first arm 62 includes a main body 621 and two extension portions 622. The main body 621 of the first arm 62 is connected with the second arm 63 and vertical to the second arm 63. The main body 621 includes a first surface 621a and a second surface 621b. The first surface 621a of the main body 621 of the first arm 62 faces to the accommodation space 34. The second surface 621b of the main body 621 of the first arm 62 faces the exterior of the housing 3. The two extension portions 622 are connected with two opposite sides of the main body 621, respectively. The two extension portions 622 are extended toward the accommodation space 34 of the housing 3.

The second arm 63 is disposed in the accommodation space 34. While the batteries 2 are disposed in the accommodation space 34, each second arm 63 is in contact with the bottom of a corresponding battery 2 of the two batteries 2 so as to support the battery 2, but not limited thereto. In this embodiment, each lever part 6 includes two first through holes 61. Each first through hole 61 is disposed on the corresponding extension portion 622 of the first arm 62. One end of the shaft 4 is penetrated through the two first through holes 61. Therefore, the lever part 6 is rotated around the shaft 4. The main body 621 of the first arm 62 is served as a force-exerting portion for receiving a force thereon selectively. While no force is applied on the main body 621 of the first arm 62 (for example the main body 621 of the first arm 62 of the lever part 6 as shown in the right side of FIG. 1), the battery 2 is disposed on the second arm 63 so that the second arm 63 is attached to the bottom plate 32 and located between the bottom plate 32 and the battery 2 due to the weight of the battery 2. Moreover, the second arm 63 is parallel to the bottom plate 32 and the bottom of the battery 2. Since the main body 621 of the first arm 62 is perpendicular to the second arm 63, the main body 621 of the first arm 62 is located in the second opening 35, and the main body 621 of the first arm 62 is located at the same surface with the first side wall 31a having the second opening 35. While a force from the accommodation space 34 toward the exterior of the housing 3 is applied on the first surface 621a of the main body 621 of the first arm 62, the main body 621 of the first arm 62 (for example the main body 621 of the first arm 62 of the lever part 6 as shown in the right side of FIG. 1) is rotated around the shaft 4 along a direction from the second opening 35 and away from the battery 2. Since the main body 621 of the first arm 62 is connected with the second arm 63, the main body 621 of the first arm 62 drives the second arm 63 to rotate around the shaft 4 toward the first opening 33, so that the second arm 63 drives the battery 2 to be withdrawn from the housing 3 through the first opening 33.

From above, the battery case structure 1 of the present disclosure includes a housing 3, a shaft 4, a fixing part 5 and at least one lever part 6. While the force from the accommodation space 34 toward the exterior of the housing 3 is applied on the main body 621 of the first arm 62 of the lever part 6, the main body 621 of the first arm 62 drives the second arm 63 to rotate around the shaft 4, so that second arm 63 drives the battery 2 to be withdrawn from the housing 3 through the first opening 33. By using the conventional battery case structure, the user needs to touch the battery in the battery case through two elongated openings on two opposite sides of the battery case and push the battery simultaneously. Comparing the conventional battery case structure with the battery case structure of the present disclosure, the user can withdraw the battery 2 from the battery case structure 1 by applying force on the main body 621 of the first arm 62 of the lever part 6 merely. Consequently, the operation of withdrawing the battery 2 from the battery case structure 1 is labor-saving and convenient.

In this embodiment, for allowing the user to apply the force on the main body 621 of the first arm 62 of the lever part 6, the cross sectional area of the second opening 35 is greater than the cross sectional area of the main body 621 of the first arm 62. Namely, the profile of the second opening 35 covers the profile of the main body 621 of the first arm 62, so that the main body 621 of the first arm 62 fails to cover the second opening 35 completely. Therefore, a space is reserved in the second opening 35 for allowing the tool of the user (for example one finger of the user) to apply the force. Hence, the user can utilize the tool to apply the force on the first surface 621a of the main body 621 of the first arm 62 through the space reserved in the second opening 35.

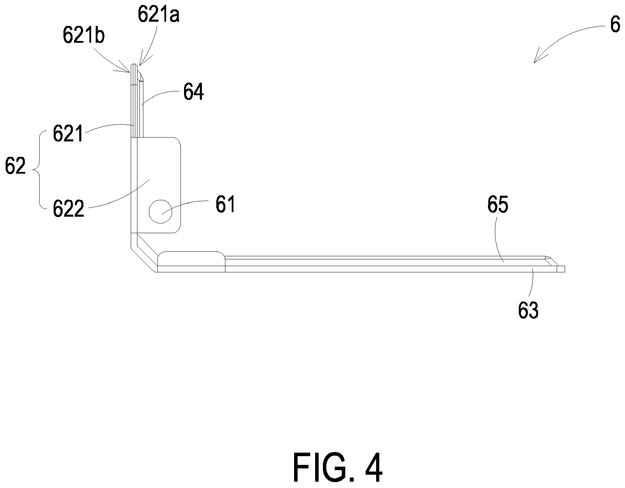

FIG. 4 is a schematic perspective view illustrating the lever part of the battery case structure of FIG. 1. Please refer to FIGS. 1 to 4. In this embodiment, the first arm 62 includes a first protrusion 64 formed on the first surface 621a of the first arm 62. The first protrusion 64 is a strip structure for enhancing the structure strength of the first arm 62 and preventing the structure of the first arm 62 from being damaged while the user applies force on the first surface 621a of the main body 621 of the first arm 62. Moreover, the second arm 63 includes a second protrusion 65 formed on the side of the second arm 63 facing the first opening 33. The second protrusion 65 is a strip structure for enhancing the structure strength of the second arm 63. While the user applies force on the main body 621 of the first arm 62 to drive the second arm 63 to rotate around the shaft 4, the second protrusion 65 prevents the structure of the second arm 63 from being damaged due to the weight of the battery 2 disposed on the second arm 63.

While the battery 2 is disposed in the accommodation space 34 completely, a part of the bottom of the battery 2 is in contact with the second arm 63. In some embodiments, the bottom of the battery 2 has a specific length. The length of the section of the second arm 63 in contact with the bottom of the battery 2 is equal to half of the specific length of the battery 2. Therefore, an end of the second arm 63 keeping away from the first arm 62 is in contact with a midpoint of a surface of the bottom of the battery 2. While the second arm 63 drives the battery 2 to move, the second arm 63 applies force on the midpoint of the bottom of the battery 2. Consequently, the battery 2 is withdrawn from the housing 3 along the direction perpendicular to the bottom plate 32 of the housing 3 for avoiding the oblique of the battery 2, so that the battery 2 is withdrawn from the housing 3 easily. In some embodiments, the housing 3 includes a detachable cover 30. The cover 30 is detachably connected with the side walls 31 of the housing 3 and covers the first opening 33 to seal the accommodation space 34. While the battery 2 is disposed in the accommodation space 34 through the first opening 33 or the battery 2 is driven by the second arm 63 to be withdrawn from the housing 3, the cover 30 is detached from the housing 3. The accommodation space 34 is exposed to facilitate disposing the battery 2 in the accommodation space 34 through the first opening 33 or withdrawing the battery 2 from the accommodation space 34. In some embodiments, a side of the cover 30 is connected with one of the plurality of the side walls 31. The cover 30 is rotated around the side of the cover 30 connected with the side wall 31, so that the cover 30 is lifted off and the accommodation space 34 is exposed. While the battery 2 is disposed in the accommodation space 34 through the first opening 33 or the battery 2 is driven by the second arm 63 to be withdrawn from the housing 3, the user rotates the cover 30 and the accommodation space 34 is exposed to facilitate disposing the battery 2 in the accommodation space 34 through the first opening 33 or withdrawing the battery 2 from the accommodation space 34.

Please refer to FIGS. 1 to 3 again. In this embodiment, the fixing part 5 includes a first supporting wall 51 and two second supporting walls 52. The two second supporting walls 52 are connected with the first supporting wall 51, respectively. Two sides of the first supporting wall 51 are fixed on the third side wall 31c and the fourth side wall 31d, respectively, so that the fixing part 5 is fixed on the housing 3 through the first supporting wall 51. The two second supporting walls 52 are extended from two opposite ends of the first supporting wall 51 toward the second opening 35. The two second supporting walls 52 are parallel to each other, and each of the two second supporting walls 52 includes a second through hole 53 corresponding in position to a corresponding first through hole 61 of the first arm 62. The fixing part 5 further includes two fixing elements 54. Each fixing element 54 is penetrated through the corresponding second through hole 53 and engaged with a corresponding end of the shaft 4 so as to fix the end of the shaft 4. Consequently, the shaft 4 is fixed between the two second supporting walls 52 and the shaft 4 is fixed on the housing 3 through the fixing part 5. It is noted that the structure of the fixing part 5 is not limited to the above embodiment and can be varied according to the practical requirements. For example, the fixing part 5 is extended from the first side wall 31a of the housing 3, and the fixing part 5 and the first side wall 31a of the housing 3 are integrally formed into one piece. The fixing part 5 can be any form to allow the shaft 4 to penetrate therethrough.

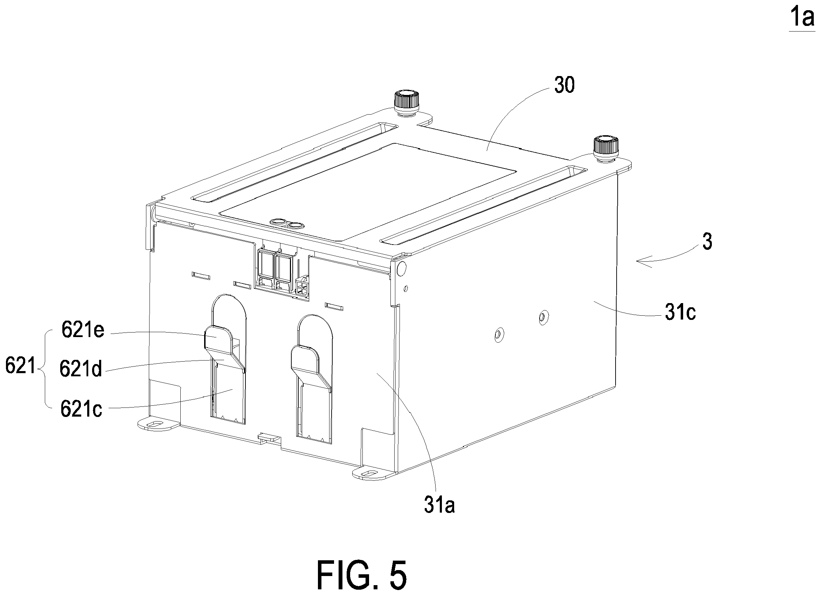

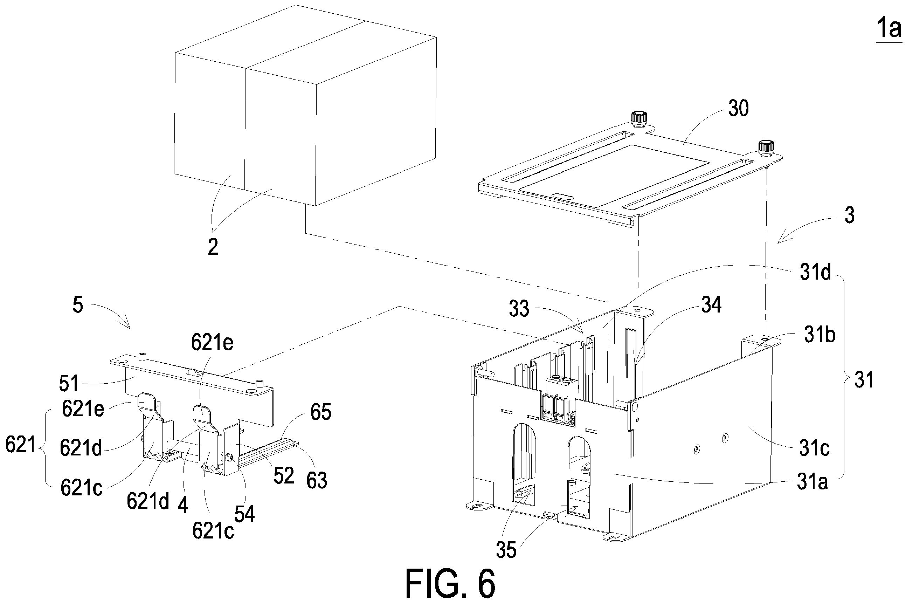

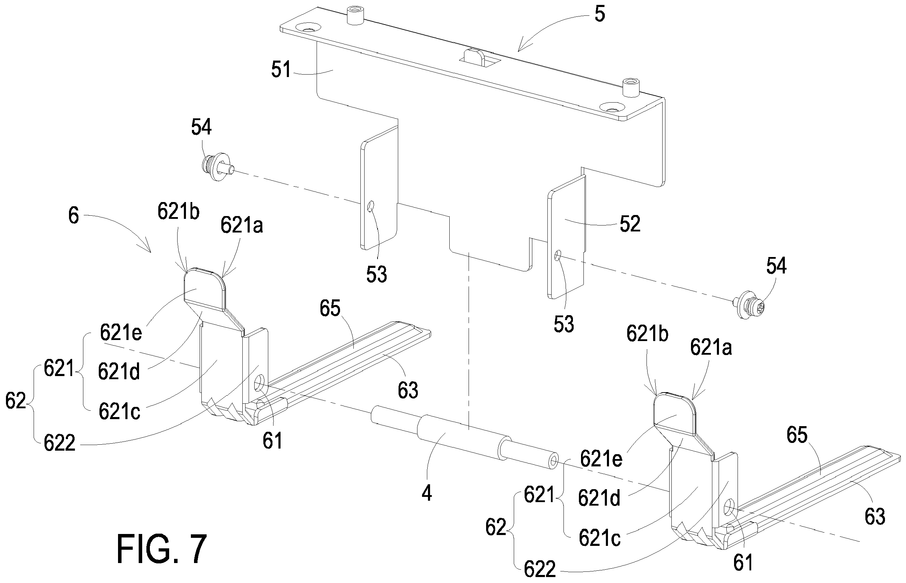

FIG. 5 is a schematic perspective view illustrating a battery case structure according to a second embodiment of the present disclosure. FIG. 6 is a schematic exploded view illustrating the battery case structure of FIG. 5. FIG. 7 is a schematic exploded view illustrating a shaft, a fixing part and a lever part of the battery case structure of FIG. 5. As shown in FIGS. 5 to 7, the battery case structure 1a of this embodiment includes a housing 3, a shaft 4, a fixing part 5 and at least one lever part 6. The structures and functions of the housing 3, the shaft 4, the fixing part 5 and the lever part 6 of the battery case structure 1a of this embodiment are similar to those of the first embodiment. Component parts and elements corresponding to those of the first embodiment are designated by identical numeral references, and detailed descriptions thereof are omitted. Different from the main body 621 of the first arm 62 of the lever part 6 of the first embodiment, the main body 621 of the first arm 62 of the lever part 6 of this embodiment further includes a first portion 621c, a second portion 621d and a third portion 621e. An end of the first portion 621c is connected with an end of the second arm 63. The other end of the first portion 621c is connected with an end of the second portion 621d. The second portion 621d is extended from the accommodation space 34 toward the exterior of the housing 3. The other end of the second portion 621d is connected with an end of the third portion 621e. The third portion 621e is extended from the end connected with the second portion 621d toward the first opening 33. While no force is applied on the lever part 6, the second portion 621d and the third portion 621e of the main body 621 of the first arm 62 are located at the exterior of the housing 3, and a gap is formed between the second portion 621d and the second opening 35 and between the third portion 621e and the second opening 35. While the user desires to apply force on the first arm 62, the user doesn't need to put the tool into the accommodation space 34 through the second opening 35. The user only needs to apply force on the first surface 621a of the third portion 621e of the main body 621 of the first arm 62 from the exterior of the housing 3. Consequently, the second arm 63 is driven to rotate around the shaft 4 and push the battery 2 to be withdrawn from the housing 3, so that the battery 2 is withdrawn from the battery case structure 1a easily.

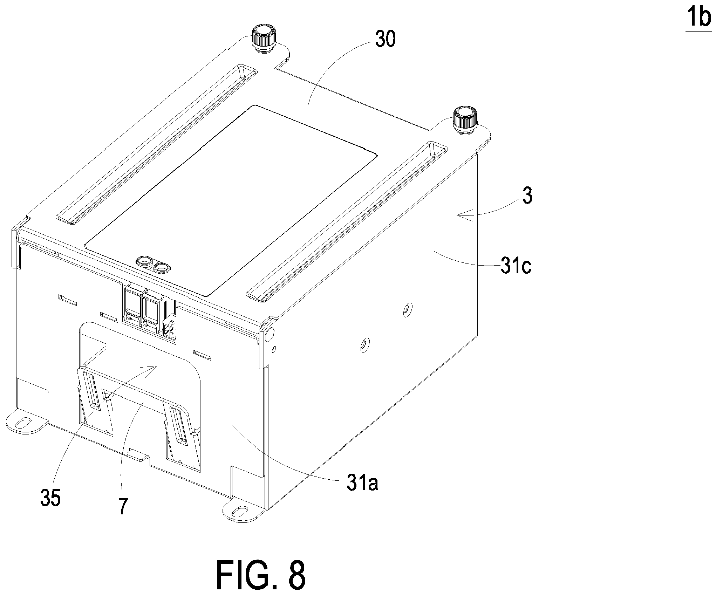

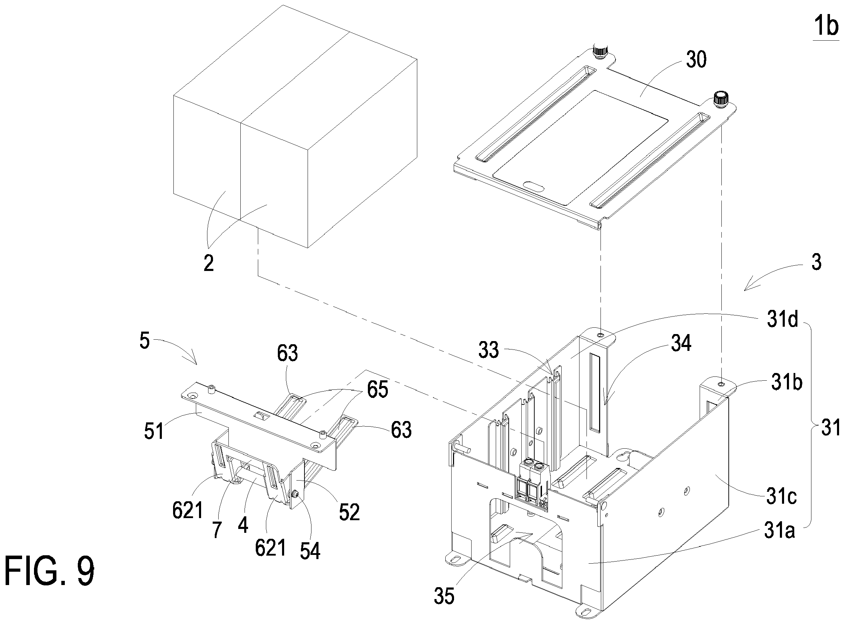

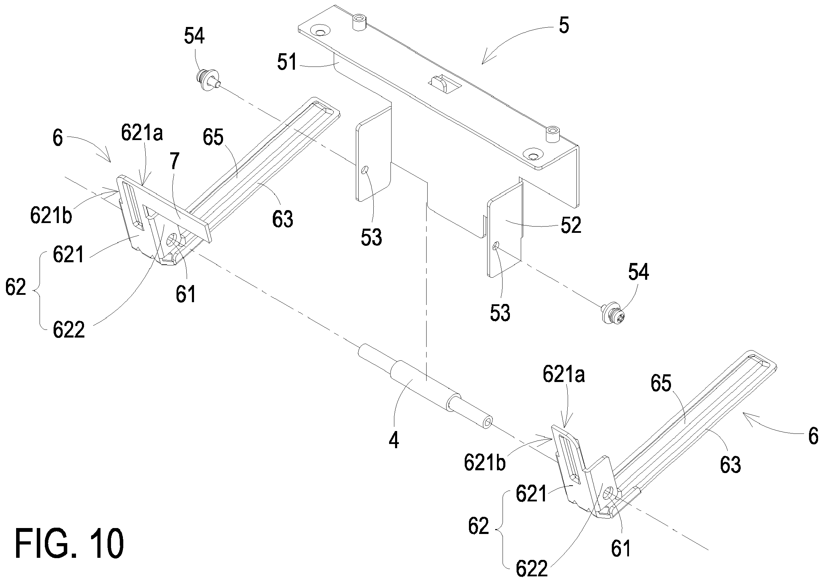

FIG. 8 is a schematic perspective view illustrating a battery case structure according to a third embodiment of the present disclosure. FIG. 9 is a schematic exploded view illustrating the battery case structure of FIG. 8. FIG. 10 is a schematic exploded view illustrating a shaft, a fixing part and a lever part of the battery case structure of FIG. 8. As shown in FIGS. 8 to 10, the battery case structure 1b of this embodiment includes a housing 3, a shaft 4, a fixing part 5 and at least one lever part 6. The structures and functions of the housing 3, the shaft 4, the fixing part 5 and the lever part 6 of the battery case structure 1b of this embodiment are similar to those of the first embodiment. Component parts and elements corresponding to those of the first embodiment are designated by identical numeral references, and detailed descriptions thereof are omitted. Different from the battery case structure 1 of the first embodiment, the battery case structure 1b of this embodiment further includes a connection arm 7. Two ends of the connection arm 7 are connected with the ends of the main bodies 621 of the first arms 62 of the two lever parts 6, respectively. The connection arm 7 and the two lever parts 6 are formed into an inverted U-shaped structure. In this embodiment, the first side wall 31a includes a single second opening 35. Preferably but not exclusively, the second opening 35 is an inverted U-shaped opening. The connection arm 7 is served as a force-exerting portion for receiving the force thereon selectively. While no force is applied on the connection arm 7, the battery 2 is disposed on the second arm 63 so that the second arm 63 is attached to the bottom plate 32 and located between the bottom plate 32 and the battery 2 due to the weight of the battery 2. Moreover, the second arm 63 is parallel to the bottom plate 32 and the battery 2. Since the plane defined by the main body 621 of the first arm 62 and the connection arm 7 is perpendicular to the second arm 63, the main body 621 of the first arm 62 and the connection arm 7 are located in the second opening 35, and the main body 621 of the first arm 62 and the connection arm 7 are located at the same surface with the first side wall 31a having the second opening 35. While the force from the accommodation space 34 toward the exterior of the housing 3 is applied on a side of the connection arm 7 adjacent to the accommodation space 34, the connection arm 7 drives the main bodies 621 of the first arms 62 of the two lever parts 6 to rotate around the shaft 4 along a direction from the second opening 35 and away from the battery 2.

Since the main body 621 of each first arm 62 is connected with the corresponding second arm 63, the main body 621 of each first arm 62 drives the corresponding second arm 63 to rotate around the shaft 4 toward the first opening 33, so that the two second arms 63 drive the two batteries 2 to be withdrawn from the housing 3 through the first opening 33, respectively. Since the two lever parts 6 drive the two batteries 2 to be withdrawn from the housing 3 simultaneously, the two batteries 2 are withdrawn simultaneously by one force exerted by the user. Consequently, the batteries 2 are withdrawn from the housing 3 conveniently. In some embodiments, the connection arm 7 and one of the two lever parts 6 are integrally formed into one piece. In other embodiment, the connection arm 7 and the two lever parts 6 are integrally formed into one piece.

From the above descriptions, the battery case structure of the present disclosure includes a housing, a shaft, a fixing part and at least one lever part. While the force from the accommodation space toward the exterior of the housing is applied on the main body of the first arm of the lever part, the main body of the first arm drives the second arm to rotate around the shaft, so that the second arm drives the battery to be withdrawn from the housing through the first opening. By using the conventional battery case structure, the user needs to touch the battery in the battery case structure through two elongated openings on two opposite sides of the battery case and push the battery simultaneously. Comparing with the conventional battery case structure with the battery case structure of the present disclosure, the user can withdraw the battery from the battery case structure by applying force on the main body of the first arm of the lever part merely. Consequently, the operation of withdrawing the battery from the battery case structure is labor-saving and convenient. Furthermore, the battery case structure of the present disclosure is locked and fixed on a din rail for providing electric power to an electric equipment disposed on the din rail. Preferably but not exclusively, the electric equipment is a power supply or a server.

While the disclosure has been described in terms of what is presently considered to be the most practical and preferred embodiments, it is to be understood that the disclosure needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A battery case structure (1) for accommodating at least one battery (2) therein, the battery case structure (1) comprising:
a housing (3) comprising a plurality of side walls (31) and a bottom plate (32), wherein the plurality of side walls (31) are connected with each other and connected with the bottom plate (32) respectively, the plurality of side walls (31) and the bottom plate (32) define an accommodation space (34) in the housing (3) and comprising a first opening (33), the battery (2) is disposed in the accommodation space (34) through the first opening (33), and one of the plurality of side walls (31) comprises at least one second opening (35) in fluid communication with the accommodation space (34);
a shaft (4);
a fixing part (5) disposed in and connecting with the housing (3), wherein the shaft (4) is fixed to the housing (3) through the fixing part (5); and
at least one lever part (6) comprising at least one first through hole (61), a first arm (62) and a second arm (63), wherein the first arm (62) comprises a main body (621) and at least one extension portion (622), the main body (621) is connected with the second arm (63), the extension portion (622) is connected with the main body (621) and extended from the main body (621) toward the accommodation space (34), the second arm (63) is in contact with the battery (2) while the battery (2) is disposed in the accommodation space (34), and the first through hole (61) is disposed on the extension portion (622), wherein the shaft (4) is penetrated through the first through hole (61), so that the lever part (6) is rotated around the shaft (4);
wherein in response to a force applied on the main body (621) of the first arm (62), the main body (621) of the first arm (62) is rotated around the shaft (4) along a direction from the second opening (35) and away from the battery (2), and the main body (621) of the first arm (62) drives the second arm (63) to rotate around the shaft (4) toward the first opening (33), so that the second arm (63) drives the battery (2) to be withdrawn from the housing (3) through the first opening (33).

2. The battery case structure (1) according to claim 1, wherein the plurality of side walls (31) comprises a first side wall (31a), a second side wall (31b), a third side wall (31c) and a fourth side wall (31d), the first side wall (31a) and the second side wall (31b) are located in two opposite sides of the housing (3), the third side wall (31c) and the fourth side wall (31d) are located in two opposite sides of the housing (3) and located between the first side wall (31a) and the second side wall (31b), the first side wall (31a) comprises the second opening (35), and two ends of the fixing part (5) are connected with the third side wall (31c) and the fourth side wall (31d) of the housing (3), respectively.

3. The battery case structure (1) according to claim 1, wherein the main body (621) of the first arm (62) is connected with the second arm (63) and perpendicular to the second arm (63), the main body (621) of the first arm (62) comprises a first surface (621a) and a second surface (621b), the first surface (621a) faces to the accommodation space (34), and the second surface (621b) faces to the exterior of the housing (3), wherein the force from the accommodation space (34) toward the exterior of the housing (3) is applied on the first surface (621a) of the main body (621) of the first arm (62).

4. The battery case structure (1) according to claim 3, wherein the first arm (62) comprises a first protrusion (64) formed on the first surface (621a) of the main body (621), and the first protrusion (64) is a strip structure.

5. The battery case structure (1) according to claim 1, wherein second arm (63) comprises a second protrusion (65), the second protrusion (65) is formed on a side of the second arm (63) facing the first opening (33), and the second protrusion (65) is a strip structure.

6. The battery case structure (1) according to claim 1, wherein a cross sectional area of the second opening (35) is greater than a cross sectional area of the main body (621) of the first arm (62).

7. The battery case structure (1) according to claim 1, wherein while the battery (2) is disposed in the accommodation space (34) completely, the battery (2) has a bottom having a specific length, and the length of a section of the second arm (63) in contact with the bottom of the battery (2) is equal to half of the specific length of the battery (2).

8. The battery case structure (1) according to claim 1, wherein the main body (621) of the first arm (62) is located in the second opening (35) and located at the same surface with the side wall (31) having the second opening (35) while no force is applied on the main body (621) of the first arm (62).

9. The battery case structure (1) according to claim 1, wherein the fixing part (5) comprises a first supporting wall (51) and two second supporting walls (52), the two second supporting walls (52) are connected with the first supporting wall (51) respectively, and two ends of the first supporting wall (51) are fixed on the corresponding side walls (31), respectively, wherein the two second supporting walls (52) are extended from the two opposite ends of the first supporting wall (51) toward the second opening (35), and the two second supporting walls (52) are parallel to each other.

10. The battery case structure (1) according to claim 9, wherein the fixing part (5) comprises two fixing elements (54), and each of the two second supporting walls (52) comprises a second through hole (53), wherein each fixing element (54) is penetrated through the corresponding second through hole (53) to fix an end of the shaft (4) on the fixing part (5), so as to fix the shaft (4) between the two second supporting walls (52).

11. The battery case structure (1) according to claim 1, wherein the main body (621) comprises a first portion (621c), a second portion (621d) and a third portion (621e), an end of the first portion (621c) is connected with an end of the second arm (63), the other end of the first portion (621c) is connected with an end of the second portion (621d), the second portion (621d) is extended from the accommodation space (34) toward the exterior of the housing (3), the other end of the second portion (621d) is connected with an end of the third portion (621e), and the third portion (621e) is extended toward the first opening (33) from the end of the third portion (621e) connecting with the second portion (621d).

12. The battery case structure (1) according to claim 1, wherein the at least one lever part (6) comprises two lever parts (6), and the battery case structure (1) comprises a connection arm (7), wherein two ends of the connection arm (7) are connected with one end of the main bodies of the first arms (62) of the two lever parts (6), respectively.

13. The battery case structure (1) according to claim 1, wherein the fixing part (5) is extended from the housing (3), the fixing part (5) and the housing (3) are integrally formed into one piece.
